# FASCICULE DE BREVET EUROPEEN

(11) **EP 3 080 173 B1**
(45) Date de publication et mention de la délivrance du brevet: **18.10.2017**
(21) Numéro de dépôt: 14809871.8
(22) Date de dépôt: 11.12.2014
(51) Int. Cl.: C08F 214/24, H01M 8/10, C08F 216/14

(54) **COPOLYMERES COMPRENANT DES GROUPES PROTOGENES RETICULABLES UTILISABLES POUR CONSTITUER DES MEMBRANES DE PILE A COMBUSTIBLE**
COPOLYMERE MIT VERNETZBAREN PROTOGENEN GRUPPEN FÜR EIN BRENNSTOFFZELLMEMBRANEN
COPOLYMERS COMPRISING CROSSLINKABLE PROTOGENIC GROUPS WHICH CAN BE USED TO CONSTITUTE FUEL CELL MEMBRANES

(30) Priorité: 13.12.2013 FR 1362634
(43) Date de publication de la demande: 19.10.2016
(73) Titulaire: Commissariat à l'Énergie Atomique et aux Énergies Alternatives, 75015 Paris (FR)
(72) Inventeur: BUVAT, Pierrick, F-37250 Montbazon (FR); BIGARRE, Janick, F-37000 Tours (FR); SOUQUET-GRUMEY, Julien, F-86000 Poitiers (FR); DAVID, Ghislain, F-34080 Montpellier (FR); LABALME, Etienne, F-30390 Aramon (FR); LOUBAT, Cédric, F-34740 Vendargues (FR); BOUTEVIN, Gilles, F-34980 St Clement de Riviere (FR)
(74) Mandataire: Brevalex
(86) Numéro de dépôt international: PCT/EP2014/077354
(87) Numéro de publication internationale: WO 2015/086736

(56) Documents cités:
- WO-A1-99/36381
- WO-A1-2011/048076
- FR-A1- 2 843 398
- US-A1- 2011 082 312

## Description

### DOMAINE TECHNIQUE

La présente invention a trait à des copolymères réticulables originaux comprenant des groupes protogènes spécifiques, dont une partie constitue des groupes réticulables.

Ces copolymères réticulables, présentant d'excellentes capacités physico-chimiques, en particulier, en termes de capacités d'échange ionique, de stabilité thermique, de stabilité chimique (telle que l'inertie chimique et l'insolubilité) et de propriétés mécaniques, peuvent trouver leur application dans la préparation de membranes échangeuses d'ions, destinées aux piles à combustible, en particulier de piles à combustible PEMFC (signifiant « Proton Exchange Membrane Fuel Cell » pour « Pile à combustible à membrane échangeuse de protons ») et DMFC (signifiant « Direct Methanol Fuel Cell » pour « Pile à combustible directe au méthanol »).

### ÉTAT DE LA TECHNIQUE ANTÉRIEURE

Une pile à combustible comporte, classiquement, un empilement de cellules élémentaires, au sein desquelles a lieu une réaction électrochimique entre deux réactifs qui sont introduits de manière continue. Le combustible, tel que l'hydrogène, pour les piles fonctionnant avec des mélanges hydrogène/oxygène (PEMFC) ou le méthanol pour des piles fonctionnant avec des mélanges méthanol/oxygène (DMFC), est amené au contact de l'anode, alors que le comburant, généralement l'oxygène, est amené au contact de la cathode. L'anode et la cathode sont séparées par un électrolyte, de type membrane échangeuse d'ions. La réaction électrochimique, dont l'énergie est convertie en énergie électrique, se scinde en deux demi-réactions :
- une oxydation du combustible, se déroulant à l'interface anode/électrolyte produisant, dans le cas des piles à hydrogène des protons H⁺, qui vont traverser l'électrolyte en direction de la cathode, et des électrons, qui rejoignent le circuit extérieur, afin de concourir à la production d'énergie électrique ;
- une réduction du comburant, se déroulant à l'interface électrolyte/cathode, avec production d'eau, dans le cas des piles à hydrogène.

La réaction électrochimique a lieu au niveau d'un assemblage électrode-membrane-électrode.

L'assemblage électrode-membrane-électrode est un assemblage très mince d'une épaisseur de l'ordre du millimètre et chaque électrode est alimentée par les gaz combustible et comburant par exemple à l'aide d'une plaque cannelée, dite plaque bipolaire.

La membrane conductrice ionique est généralement une membrane organique comprenant des groupes ioniques qui, en présence d'eau, permettent la conduction des protons produits à l'anode par oxydation de l'hydrogène.

Plus précisément, en milieu aqueux, les groupes acides portés par les membranes se dissocient totalement et libèrent des protons libres, qui s'entourent d'une ou plusieurs molécules d'eau, assurant ainsi un transport de protons selon un mécanisme véhiculaire assuré par l'eau d'hydratation. La mobilité des protons dans la membrane est donc étroitement liée à la teneur en eau (soit, en d'autres termes, à la capacité de gonflement de la membrane) et la conductivité de la membrane (liée au nombre de sites acides de celle-ci).

Outre la capacité à assurer la conduction protonique, les membranes doivent également répondre aux spécificités suivantes :
- une faible perméabilité aux gaz (notamment au gaz H₂ pour les piles PEMFC et à la vapeur de méthanol pour les piles DMFC), afin d'assurer une bonne étanchéité entre les compartiments anodique et cathodique de la pile ainsi qu'un rendement électrique et catalytique maximal ;
- une prise d'eau suffisante pour favoriser un bon taux de gonflement, afin d'assurer un bon transport protonique à partir d'une dissociation des protons acides, formant ainsi une phase ionique hydratée dans la totalité du volume de la membrane ;
- une bonne stabilité électrochimique et mécanique, notamment une innocuité réactionnelle vis-à-vis des gaz réactifs (tels que l'hydrogène ou les vapeurs de méthanol) et une résistance aux pressions de gaz auxquelles est soumise la pile.

Pour tenter de surmonter de telles exigences, les premiers polymères à avoir été élaborés sont des polymères présentant des groupes protogènes du type acide sulfonique, plus particulièrement des polymères perfluorés sulfoniques tels que le Nafion®. Ces polymères présentent un bon transfert protonique grâce à une forte acidité liée aux groupes acide sulfonique et à un nombre d'hydratation λ important (λ>15, étant défini comme le nombre de molécules d'eau par groupement protogène). Toutefois, les membranes élaborées à partir de ces polymères ne présentent d'efficacité réelle que pour de forts taux d'hydratation et se trouvent ainsi limitées à des utilisations à faibles températures (à savoir, des températures inférieures à 85°C) et haute humidité relative (par exemple, supérieure à 80%). Qui plus est, elles présentent une perméabilité aux alcools, en particulier au méthanol, ce qui les rend incompatibles avec une utilisation dans des piles DMFC. Enfin, elles peuvent présenter un coût. Les documents WO2011/048076 et FR 2843398 décrivent des copolymères utilisables dans des membranes pour piles à combustibles ayant une stabilité et conductivité élevée pour des températures allant jusqu'à 150°C. Pour contrer ces inconvénients, d'autres alternatives ont été proposées pour la constitution de membranes pour pile à combustible.

Ainsi, certains auteurs ont proposé de réaliser des membranes à partir de copolymères comprenant des groupes acides phosphoniques qui permettent une utilisation de la pile à des températures supérieures à 85°C, en particulier à des températures supérieures à 100°C et dans des conditions anhydres, avec toutefois les inconvénients inhérents à ces groupes acides phosphoniques, à savoir :
- une acidité des groupes acide phosphonique plus faible que celle des groupes acide sulfonique, ce qui requiert un taux de présence de ces groupes dans les polymères plus élevé que celui des groupes acide sulfonique pour obtenir une conduction équivalente ; et
- des difficultés de synthèse de ce type de polymère.

Les inventeurs se sont proposé de mettre au point de nouveaux copolymères, qui puissent être utilisés, sous une forme réticulée ou non, pour constituer des membranes de pile à combustible, qui répondent aux cahiers de charges suivantes :
- un taux important de groupes phosphonés et/ou acide phosphonique ;
- une conductivité protonique élevée pour des températures allant de la température ambiante jusqu'à 150°C et pour des humidités relatives inférieures à 50% ;
- une stabilité thermique à des températures élevées, par exemple, allant jusqu'à 150°C ;
- une facilité à être mise en forme en membrane, liée notamment à l'aptitude de ces copolymères à être solubilisés dans des solvants organiques, tels que le diméthylsulfoxyde ;
- une facilité de synthèse de ces copolymères ;
- une capacité à être réticulé grâce à la présence de groupes spécifiques.

### EXPOSÉ DE L'INVENTION

Des copolymères répondant aux spécificités mentionnées ci-dessus sont des copolymères comprenant :
*au moins un motif répétitif de formule (I) suivants : 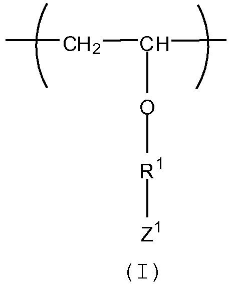
*au moins un motif répétitif de formule (II) suivants : 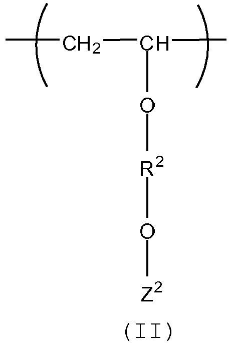 et
*au moins un motif répétitif de formule (III) suivants : 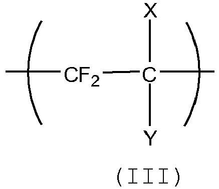 dans lesquelles :
   - R¹ et R² représentent, indépendamment l'un de l'autre, un groupe alkylène ;
   - Z¹ est un groupe de formule -PO₃R₃R₄, R₃ et R₄ représentant, indépendamment l'un de l'autre, un atome d'hydrogène, un groupe alkyle ou un cation;
   - Z² est un groupe de formule -SO₂R₅, R₅ représentant un groupe alkyle ou un groupe aryle ;
   - X et Y représentent, indépendamment l'un de l'autre, un atome d'halogène ou un groupe perfluorocarboné.

Avant d'entrer plus en détail dans la description, nous proposons les définitions suivantes.

Par groupe perfluorocarboné, on entend, classiquement, dans ce qui précède et ce qui suit, un groupe comprenant exclusivement des atomes de carbone et des atomes de fluor. Par exemple, il peut s'agir d'un groupe perfluoroalkyle, comprenant de 1 à 6 atomes de carbone, tel qu'un groupe perfluorométhyle -CF₃.

Par groupe alkylène, on entend, classiquement, un groupe alkyle formant pont entre deux autres groupes comprenant, par exemple, de 1 à 10 atomes de carbone, tel qu'un groupe éthylène de formule -CH₂-CH₂-, un groupe n-butylène de formule -CH₂-CH₂-CH₂-CH₂-.

Par groupe alkyle, on entend, classiquement, dans ce qui précède et ce qui suit, un groupe alkyle, linéaire ou ramifié, de formule -CₙH₂ₙ₊₁, n correspondant au nombre d'atomes de carbone, ce nombre pouvant aller de 1 de 10. En particulier, il peut s'agir d'un groupe n-propyle de formule -CH₂-CH₂-CH₃.

Par groupe aryle, on entend, classiquement, dans ce qui précède et ce qui suit, un groupe aryle comprenant de 6 à 18 atomes de carbone, tel qu'un groupe phényle, ledit groupe aryle pouvant être substitué par un ou plusieurs groupes alkyles.

Selon l'invention, R¹ peut être un groupe -CH₂-CH₂- et R² peut être un groupe de formule -CH₂-CH₂-CH₂-CH₂- .

Selon l'invention, X et Y peuvent représenter chacun un atome d'halogène, tel que le fluor et le chlore, l'un au moins des groupes X ou Y étant, de préférence, un atome de fluor ou X peut représenter un groupe perfluoroalkyle, tel que -CF₃ tandis que Y représente un atome d'halogène, tel que F.

Les copolymères de l'invention peuvent comprendre :
- de 5 à 94,9% molaire, idéalement de 40 à 80% molaire de motif répétitif de formule (I) ;
- de 0,1 à 30% molaire, idéalement de 1 à 20% molaire de motif répétitif de formule (II) ; et
- de 5 à 94, 94% molaire, idéalement de 20 à 59% molaire de motif répétitif de formule (III).

La masse molaire en nombre des copolymères de l'invention peut aller de 1000 à 100 000 g.mol⁻¹ et, plus particulièrement, de 5000 à 30000 g.mol⁻¹.

Outre les motifs répétitifs de formules (I) (II) et (III) susmentionnées, les copolymères peuvent comprendre, en outre, au moins un motif répétitif de formule (IV) suivants : 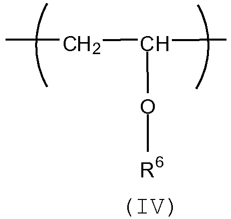 dans laquelle R⁶ est un groupe alkyle pouvant comprendre de 1 à 10 atomes de carbone, tel qu'un groupe n-propyle -CH₂-CH₂-CH₃.

D'un point de vue structural, les copolymères de l'invention peuvent être des copolymères aléatoires (ce qui signifie que les motifs répétitifs susmentionnés sont répartis de façon aléatoire dans le squelette ou la chaîne principale du copolymère), des copolymères alternés (ce qui signifie qu'il y a alternance entre un motif répétitif de formule (I), un motif répétitif de formule (II), un motif répétitif de formule (III) et éventuellement un motif répétitif de formule (IV) dans le squelette ou la chaîne principale du copolymère.

Parmi les copolymères conformes à la présente invention, on peut citer les copolymères particuliers suivantes :
- des copolymères comprenant comme motif répétitif conforme à la formule (I) un motif répétitif de formule (Ia) suivants : 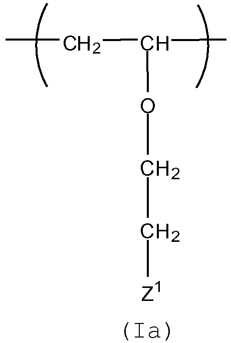 Z¹ étant un groupe de formule -PO₃R₃R₄, avec R₃ et R₄ étant tels que définis ci-dessus, R₃ et R₄ pouvant être, par exemple, un groupe éthyle ;
   comme motif conforme à la formule (II) un motif répétitif de formule (IIa) suivants : 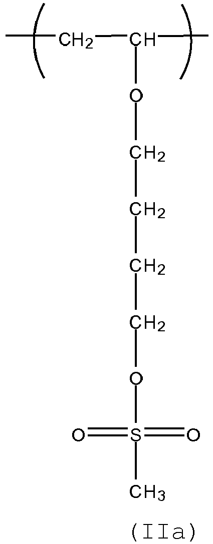 et comme motif conforme à la formule (III), un motif répétitif de formule (IIIa) suivants : 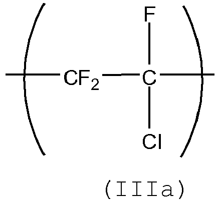
- des copolymères comprenant comme motif répétitif conforme à la formule (I) un motif répétitif de formule (Ia) suivants : 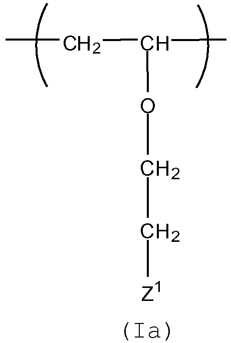 Z¹ étant un groupe de formule -PO₃R₃R₄, avec R₃ et R₄ étant tels que définis ci-dessus, R₃ et R₄ pouvant être, par exemple, un groupe éthyle ;
   comme motif conforme à la formule (II) un motif répétitif de formule (IIb) suivants : 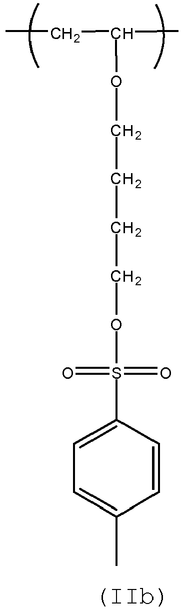 et comme motif conforme à la formule (III), un motif répétitif de formule (IIIa) suivants :

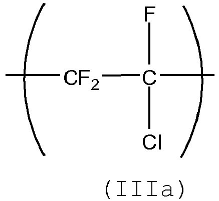

Les copolymères de l'invention peuvent être préparés par un procédé de mise en oeuvre simple comprenant :
- une étape de copolymérisation, en présence d'au moins un amorceur de radicaux libres, d'au moins un monomère de formule (V), d'au moins un monomère de formule (VI), d'au moins un monomère de formule (VII) et éventuellement d'au moins un monomère de formule (VIII) : 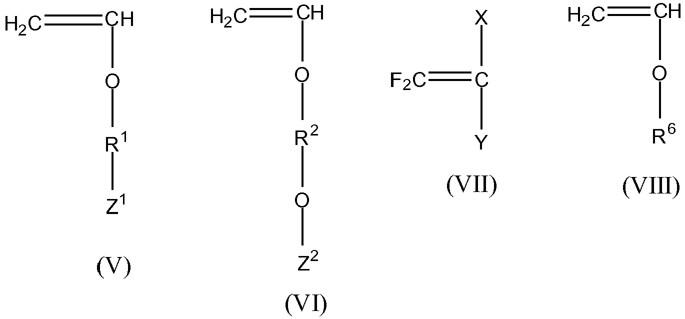 dans lesquelles R¹, Z¹, R², Z², X, Y et R⁶ sont tels que définis ci-dessus ;
- éventuellement, une étape d'hydrolyse du groupe -PO₃R₃R₄ (lorsque R₃ et R₄ représentent un groupe alkyle), moyennant quoi ledit groupe est transformé en groupe -PO₃R₃R₄, avec R₃ et R₄ représentant un atome d'hydrogène ou un cation.

Un amorceur de radicaux libres efficace dans le cadre de ce procédé peut être choisi parmi les dérivés perpivalates, tels que le perpivalate de tertiobutyle.

L'étape de polymérisation s'effectue, avantageusement, dans un solvant polaire aprotique, lequel peut être choisi parmi les solvants suivants :
- le diméthylformamide (DMF) ;
- l'acétonitrile ;
- un solvant halogéné, tel que le 1,1,2-trifluoro-1,2,2-trichloroéthane, le 1,1,1,3,3-pentafluorobutane ;
- le tétrahydrofurane ;
- l'eau, et
- les mélanges de ceux-ci.

Dans le cas où les monomères utilisés existent sous forme gazeuse (ce qui est le cas notamment du monomère chlorotrifluoroéthylène) et que la réaction se déroule sous pression, celle-ci peut être mise en oeuvre dans un autoclave.

L'éventuelle étape d'hydrolyse peut être réalisée, par exemple, à une température allant de 50°C à 120°C, par mise en contact avec un agent acide, tel que l'acide chlorhydrique ou l'acide sulfurique.

Parmi les monomères utilisés dans le cadre du procédé, les monomères de formule (VI) sont nouveaux et sont également l'objet de l'invention.

Le copolymère résultant peut ensuite subir une étape d'isolement par précipitation, par exemple, avec de l'eau distillée puis être soumis à une étape de séchage.

Comme déjà mentionné ci-dessus, les copolymères de l'invention sont des copolymères réticulables en raison, notamment, de la présence des groupes Z² des motifs répétitifs de formule (II).

La réticulation de tels copolymères, via la réaction des groupes Z², contribue à former des matériaux réticulés présentant des propriétés mécaniques renforcées, notamment, en condition humide par rapport aux copolymères dont les matériaux sont issus.

Ainsi, l'invention a trait également à un matériau réticulé susceptible d'être obtenu par un procédé comprenant une étape de réticulation thermique d'au moins un copolymère conforme à l'invention.

Plus spécifiquement, l'étape de réticulation thermique peut consister à chauffer le ou les copolymères conformes à l'invention à une température allant, par exemple, de 100 à 200°C, de préférence, allant de 140 à 170°C, le copolymère pouvant être mis, préalablement au chauffage, sous forme d'une membrane.

Dans le cas où le matériau réticulé comporte des groupes de formule -PO₃R₃R₄ non hydrolysés (soit, en d'autres termes, lorsque R₃ et R₄ représentent un groupe alkyle), il est possible d'envisager, dans le cadre du procédé de préparation du matériau réticulé, après l'étape de réticulation thermique, une étape d'hydrolyse desdits groupes, de sorte à transformer lesdits groupes phosphonates de formule -PO₃R₃R₄ en groupe acide phosphonique ou un sel de celui-ci (ce qui signifie, en d'autres termes, que R³ et R⁴ correspondent, après hydrolyse, à un atome d'hydrogène ou un cation).

Cette étape d'hydrolyse peut être réalisée à une température allant de 50 à 120°C, par mise en contact du matériau réticulé avec un agent acide, tel que l'acide chlorhydrique ou l'acide sulfurique.

Les copolymères selon l'invention, comme mentionnés précédemment, ainsi que les matériaux réticulés ont pour particularité de présenter une bonne stabilité chimique et mécanique notamment à des températures supérieures à 100°C, voire allant jusqu'à 250°C et ce, indépendamment, du taux de réticulation le cas échéant.

De ce fait, la présente invention a également pour objet une membrane comprenant au moins un copolymère tel que décrit ci-dessus et/ou au moins un matériau réticulé tel que défini ci-dessus.

Lorsqu'elles sont constituées d'au moins un copolymère tel que défini ci-dessus, elles peuvent être préparées de manière classique, par exemple, par coulée, c'est-à-dire que le copolymère est mis en solution dans un solvant adéquat, tel que le diméthylformamide, puis appliqué sur une surface plane, par exemple, une plaque de verre, à l'aide d'un dispositif, tel qu'un applicateur à main.

Le copolymère formant un film humide est ensuite séché pour former un film d'épaisseur adéquate, par exemple de 15 à 150 µm, puis décollé du substrat.

Lorsqu'elles sont constituées du matériau réticulé, elles peuvent être préparées d'une manière similaire explicitée ci-dessus, lorsqu'il est fait référence à la préparation du matériau réticulé en tant que tel.

De telles membranes, lorsque les groupes -PO₃R₃R₄ sont des groupes acide phosphonique, présentent une capacité d'échange ionique très élevée, pouvant aller jusqu'à 5,5 méq.g⁻¹. De ce fait, ces membranes peuvent être utilisées notamment pour isoler les compartiments anodiques et cathodiques d'une pile à combustible pouvant fonctionner avec les systèmes suivants :
- hydrogène, alcools, tel que méthanol à l'anode ;
- oxygène, air à la cathode.

Ainsi, la présente invention a également pour objet un dispositif de pile à combustible comprenant au moins une cellule comprenant deux électrodes disposées de part et d'autre d'une membrane telle que définie ci-dessus.

Pour préparer un tel dispositif, la membrane est placée entre deux électrodes, par exemple, en tissu de papier ou de carbone, éventuellement platiné, et imprégnées par exemple par du copolymère, selon l'invention. L'ensemble est pressé par chauffage.

Cet ensemble est ensuite inséré entre deux plaques (par exemple, en graphite, appelées plaques bipolaires, qui assurent la distribution des gaz et la conductivité électrique).

L'invention va maintenant être décrite, en référence aux exemples suivants, donnés à titre indicatif et non limitatif.

### EXPOSÉ DÉTAILLÉ DE MODES DE RÉALISATION PARTICULIERS

### EXEMPLE 1

Cet exemple a trait à la préparation d'un copolymère conforme à l'invention par copolymérisation du chlorotrifluoroéthylène (symbolisé par l'abréviation CTFE), d'un éthylvinyléther spécifique (symbolisé par l'abréviation DEVEP) et un butylvinyléther spécifique (symbolisé par l'abréviation BVEMs). Pour obtenir un taux de réticulation de 10% ultérieure (cf.exemple 3), on utilise les proportions molaires (CTFE) / (DEVEP) / (BVEMs) suivantes : 50/40/10.

Les monomères CTFE, DEVEP et BVEMs susmentionnés répondent respectivement aux formules suivantes :
*Pour le CTFE :

   F₂C=CFCl
*Pour le DEVEP : 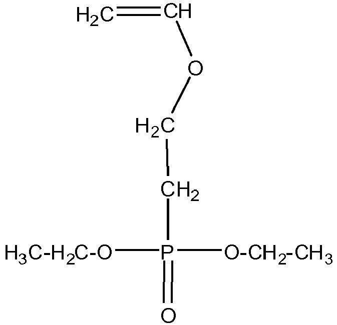
*Pour le BVEMs:

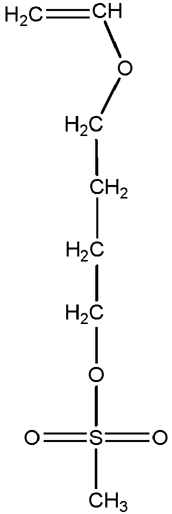

Le CTFE se présente sous forme gazeuse, ce qui nécessite l'utilisation d'un autoclave pour mettre en oeuvre la préparation du copolymère.

L'autoclave est muni d'un agitateur mécanique, de deux vannes (une vanne d'entrée et une vanne de sortie de gaz), d'un disque de sécurité et d'un manomètre de précision.

Dans un premier temps, on introduit dans un autoclave du K₂CO₃, sous forme de poudre, à raison de 3% molaire par rapport au BVEMs et le DEVEP. L'autoclave est ensuite placé sous vide environ 40 minutes. On introduit ensuite le DEVEP (13.3g), le BVEMs (3,3g) du perpivalate de tertiobutyle (0,8g) (à raison de 1% molaire par rapport au BVEMs et l'EVE) et le CTFE (10 g).

L'autoclave est ensuite placé sous agitation et chauffé progressivement jusqu'à 75°C pendant environ 15 heures. Le produit de la réaction est dissous dans de l'acétone puis précipité dans le méthanol et placé sous vide à 50°C en vue d'un séchage.

Le rendement de la réaction est de 72%.

La structure du copolymère est contrôlée par RMN (¹H et ¹⁹F), calorimétrie à balayage différentiel (intitulé, par la suite, DSC), analyse thermogravimétrie (intitulé, par la suite, ATG) et par analyse élémentaire.

### EXEMPLE 2

Le mode opératoire pour obtenir les copolymères réticulables de cet exemple reste similaire à celui suivi dans l'exemple 1, si ce n'est que l'on remplace le BVEMs par le butylvinyléther tosylé de formule suivants : 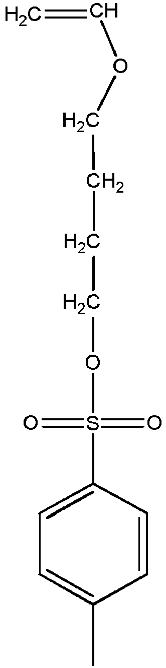 intitulé, par la suite, BVETs.

Pour obtenir un taux de réticulation de 10% ultérieurement (cf. exemple 3), on utilise les proportions molaires (CTFE) / (DEVEP) / (BVETs) : 50/40/10.

La structure du copolymère est contrôlée par RMN (¹H et ¹⁹F), DSC, ATG.

### EXEMPLE 3

Cet exemple illustre le procédé de mise en oeuvre de la réticulation et de la mise en forme des copolymères réticulables préparés selon les exemples 1 et 2 explicités ci-dessus.

Pour ce faire, dans un premier temps, il est procédé à une mise en solution du copolymère dans un solvant organique, le diméthylformamide (DMF), le solvant représentant 69% par rapport à la masse de copolymère.

Dans un deuxième temps, le mélange visqueux obtenu est déposé sur une plaque de verre au moyen d'un applicateur à main placé sous une hotte à flux laminaire. Ensuite, une évaporation lente du solvant est assurée en plaçant la plaque de verre dans une étuve, dont la température est fixée à 80°C pendant 12 heures. Puis la réaction de réticulation est réalisée en plaçant la plaque de verre dans une étuve, dont la température est fixée à 150°C pendant 12 heures.

On obtient finalement des membranes fluorophosphonées insolubles dans les solvants aqueux et organiques tels que l'eau, le méthanol, l'acétone, la méthyléthylcétone, le tétrahydrofurane, le diméthylsulfoxide et le diméthylformamide.

## Revendications

1. Copolymère comprenant :
*au moins un motif répétitif de formule (I) suivante : 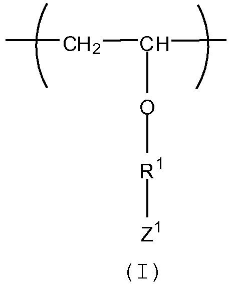
*au moins un motif répétitif de formule (II) suivante : 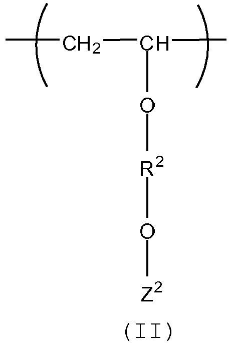 et
*au moins un motif répétitif de formule (III) suivante : 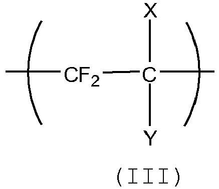 dans lesquelles :
- R¹ et R² représentent, indépendamment l'un de l'autre, un groupe alkylène ;
- Z¹ est un groupe de formule -PO₃R₃R₄, R₃ et R₄ représentant, indépendamment l'un de l'autre, un atome d'hydrogène, un groupe alkyle ou un cation;
- Z² est un groupe de formule -SO₂R₅, R₅ représentant un groupe alkyle ou un groupe aryle ;
- X et Y représentent, indépendamment l'un de l'autre, un atome d'halogène ou un groupe perfluorocarboné.

2. Copolymère selon la revendication 1, dans lequel R¹ est un groupe de formule -CH₂-CH₂-.

3. Copolymère selon la revendication 1 ou 2, dans lequel R² est un groupe de formule -CH₂-CH₂-CH₂-CH₂- .

4. Copolymère selon l'une quelconque des revendications précédentes, dans lequel X et Y représentent chacun un atome d'halogène, l'un au moins des groupes X ou Y étant un atome de fluor.

5. Copolymère selon l'une quelconque des revendications 1 à 3, dans lequel X représente un groupe perfluoroalkyle, tandis que Y représente un atome d'halogène.

6. Copolymère selon l'une quelconque des revendications précédentes, comprenant, en outre, au moins un motif répétitif de formule (IV) suivante : 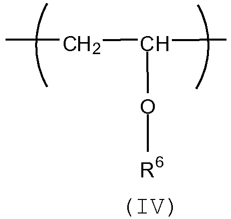 dans laquelle R⁶ est un groupe alkyle.

7. Copolymère selon l'une quelconque des revendications précédentes, choisi parmi les copolymères suivants :
- des copolymères comprenant comme motif répétitif conforme à la formule (I) un motif répétitif de formule (Ia) suivante : 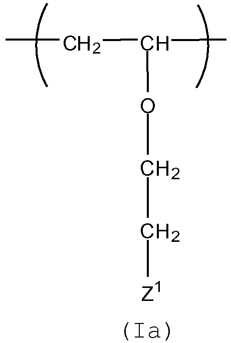 Z¹ étant un groupe de formule -PO₃R₃R₄, avec R₃ et R₄ étant tels que définis à la revendication 1 ;
comme motif conforme à la formule (II) un motif répétitif de formule (IIa) suivante : 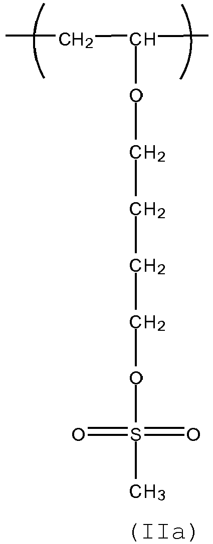 et comme motif conforme à la formule (III), un motif répétitif de formule (IIIa) suivante : 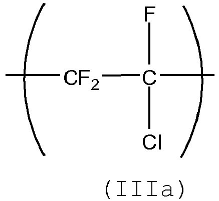
- des copolymères comprenant comme motif répétitif conforme à la formule (I) un motif répétitif de formule (Ia) suivante : 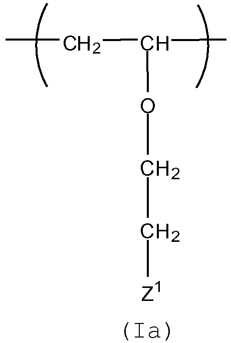 Z¹ étant un groupe de formule -PO₃R₃R₄, avec R₃ et R₄ étant tels que définis à la revendication 1;
comme motif conforme à la formule (II) un motif répétitif de formule (IIb) suivante : 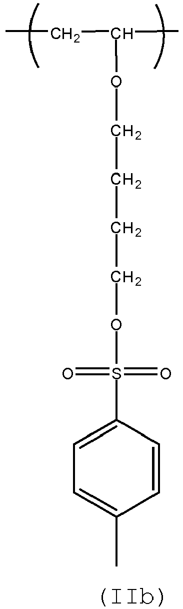 et comme motif conforme à la formule (III), un motif répétitif de formule (IIIa) suivante :

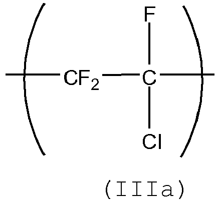

8. Procédé de préparation d'un copolymère tel que défini à la revendication 1 comprenant les étapes suivantes :
- une étape de copolymérisation, en présence d'au moins un amorceur de radicaux libres, d'au moins un monomère de formule (V), d'au moins un monomère de formule (VI), d'au moins un monomère de formule (VII) et éventuellement d'au moins un monomère de formule (VIII) : 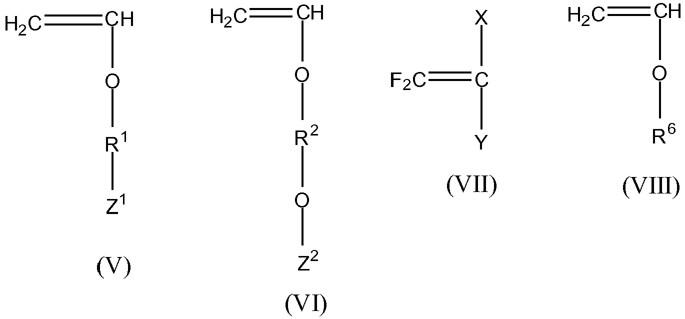 dans lesquelles R¹, Z¹, R², Z², X, Y et R⁶ sont tels que définis à la revendication 1 et à la revendication 6;
- éventuellement, une étape d'hydrolyse du groupe -PO₃R₃R₄ (lorsque R₃ et R₄ représentent un groupe alkyle), moyennant quoi ledit groupe est transformé en groupe -PO₃R₃R₄, avec R₃ et R₄ représentant un atome d'hydrogène ou un cation.

9. Matériau réticulé susceptible d'être obtenu par un procédé comprenant une étape de réticulation thermique d'au moins un copolymère tel que défini selon l'une quelconque des revendications 1 à 7.

10. Matériau réticulé selon la revendication 9, dans lequel l'étape de réticulation thermique consiste à chauffer le ou les copolymères tel(s) que défini(s) à la revendication 10 une température allant de 100 à 200°C, de préférence, allant de 140 à 170°C, le copolymère pouvant être mis, préalablement au chauffage, sous forme d'une membrane.

11. Membrane comprenant au moins un copolymère tel que défini selon l'une quelconque des revendications 1 à 7 et/ou un matériau réticulé tel que défini à la revendication 9 ou 10.

12. Dispositif de pile à combustible comprenant au moins une cellule comprenant deux électrodes disposées de part et d'autre d'une membrane telle que définie à la revendication 11.

## Patentansprüche

1. Copolymer, enthaltend:
*zumindest eine Wiederholungseinheit der nachfolgenden Formel (I): 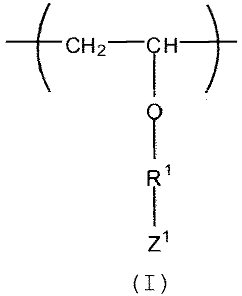
* zumindest eine Wiederholungseinheit der nachfolgenden Formel (II): 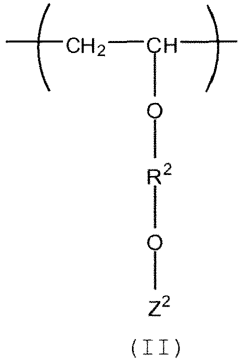 und
* zumindest eine Wiederholungseinheit der nachfolgenden Formel (III): 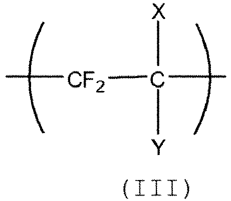 worin:
- R¹ und R² unabhängig voneinander eine Alkylen-Gruppe darstellen,
- Z¹ eine Gruppe der Formel -PO₃R₃R₄ ist, wobei R₃ und R₄ unabhängig voneinander ein Wasserstoffatom, eine Alkyl-Gruppe oder ein Kation darstellen;
- Z² eine Gruppe der Formel -SO₂R₅ ist, wobei R₅ eine Alkyl-Gruppe oder eine Aryl-Gruppe darstellt;
- X und Y unabhängig voneinander ein Halogen-Atom oder eine Perfluorkohlenstoff-Gruppe darstellen.

2. Copolymer nach Anspruch 1, wobei R¹ eine Gruppe der Formel -CH₂-CH₂-ist.

3. Copolymer nach Anspruch 1 oder 2, wobei R² eine Gruppe der Formel -CH₂-CH₂-CH₂-CH₂- ist.

4. Copolymer nach einem der vorangehenden Ansprüche, wobei X und Y jeweils ein Halogen-Atom darstellen, wobei zumindest eine der Gruppen X bzw. Y ein Fluor-Atom ist.

5. Copolymer nach einem der Ansprüche 1 bis 3, wobei X eine Perfluoralkyl-Gruppe darstellt, während Y ein Halogen-Atom darstellt.

6. Copolymer nach einem der vorangehenden Ansprüche, ferner enthaltend zumindest eine Wiederholungseinheit der nachfolgenden Formel (IV): 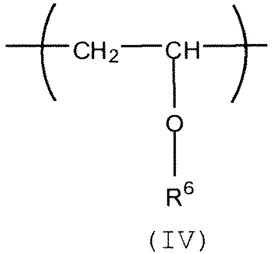 worin R⁶ eine Alkyl-Gruppe ist-.

7. Copolymer nach einem der vorangehenden Ansprüche, ausgewählt aus den nachfolgenden Copolymeren:
- Copolymere, die als der Formel (I) entsprechende Wiederholungseinheit eine Wiederholungseinheit der nachfolgenden Formel (Ia) enthalten: 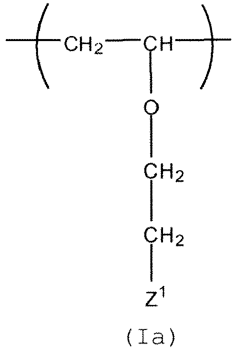 wobei Z¹ eine Gruppe der Formel -PO₃R₃R₄ ist, mit R₃ und R₄ wie in Anspruch 1 definiert;
als der Formel (II) entsprechende Einheit eine Wiederholungseinheit der nachfolgenden Formel (IIa): 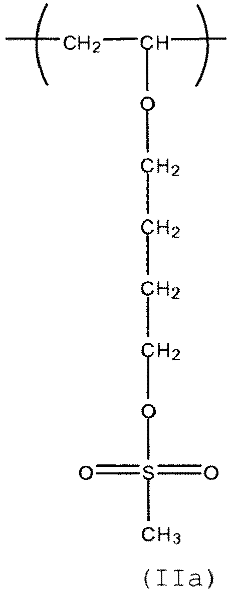 und als der Formel (III) entsprechende Einheit eine Wiederholungseinheit der nachfolgenden Formel (IIIa): 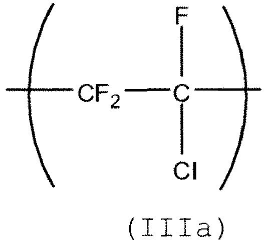
- Copolymere, die als der Formel (I) entsprechende Wiederholungseinheit eine Wiederholungseinheit der nachfolgenden Formel (Ia) enthalten: 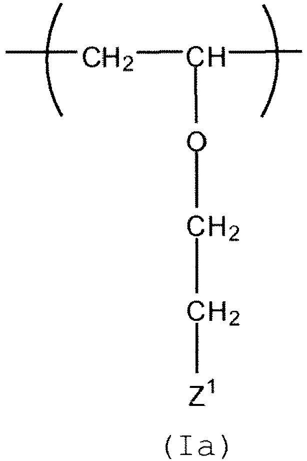 wobei Z¹ eine Gruppe der Formel -PO₃R₃R₄ ist, mit R₃ und R₄ wie in Anspruch 1 definiert;
als der Formel (II) entsprechende Einheit eine Wiederholungseinheit der nachfolgenden Formel (IIa): 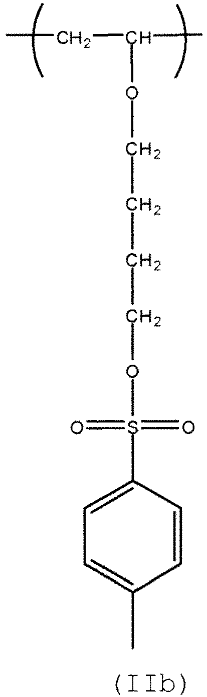 und als der Formel (III) entsprechende Einheit eine Wiederholungseinheit der nachfolgenden Formel (IIIa):

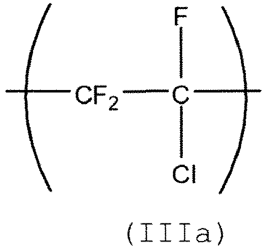

8. Verfahren zum Herstellen eines Copolymers wie in Anspruch 1 definiert, umfassend die nachfolgenden Schritte:
- einen Schritt der Copolymerisation unter Vorhandensein von zumindest einem Initiator freier Radikale, zumindest eines Monomers der Formel (V), zumindest eines Monomers der Formel (VI), zumindest eines Monomers der Formel (VII) und gegebenenfalls zumindest eines Monomers der Formel (VIII): 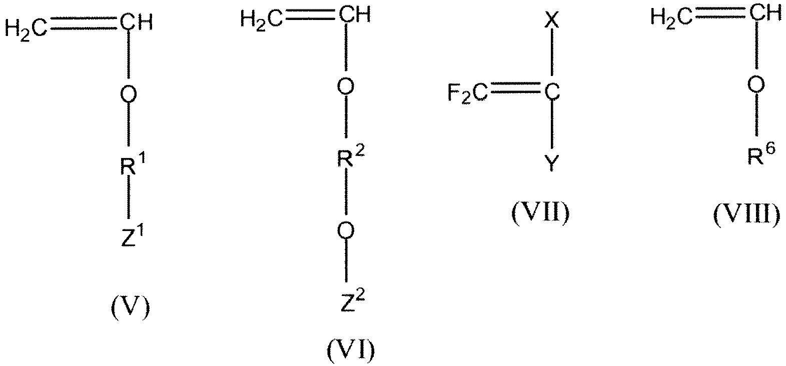 worin R¹, Z², R², Z², X, Y und R⁶ wie in Anspruch 1 und Anspruch 6 definiert sind,
- gegebenenfalls einen Schritt der Hydrolyse der Gruppe -PO₃R₃R₄ (wenn R₃ und R₄ eine Alkyl-Gruppe darstellen), wodurch die Gruppe in eine Gruppe -PO₃R₃R₄ umgewandelt wird, wobei R₃ und R₄ ein Wasserstoffatom oder ein Kation darstellen.

9. Vernetztes Material, das mit einem Verfahren erhalten werden kann, das einen Schritt des thermischen Vernetzens von zumindest einem Copolymer wie in einem der Ansprüche 1 bis 7 definiert umfasst.

10. Vernetztes Material nach Anspruch 9, wobei der Schritt des thermischen Vernetzens darin besteht, das bzw. die Copolymere wie in Anspruch 10 definiert auf eine Temperatur von 100 bis 200 °C, vorzugsweise von 140 bis 170 °C, zu erhitzen, wobei das Copolymer vor dem Erhitzen in Form einer Membran bereitgestellt werden kann.

11. Membran mit zumindest einem Copolymer wie in einem der Ansprüche 1 bis 7 definiert und/oder mit einem vernetzten Material wie in Anspruch 9 oder 10 definiert.

12. Brennstoffzellenvorrichtung mit zumindest einer Zelle, die zwei Elektroden aufweist, die beiderseits einer Membran wie in Anspruch 11 definiert angeordnet sind.

## Claims

1. A copolymer comprising:
*at least one recurrent unit of the following formula (I) : 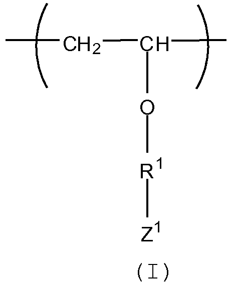
*at least one recurrent unit of the following formula (II) : 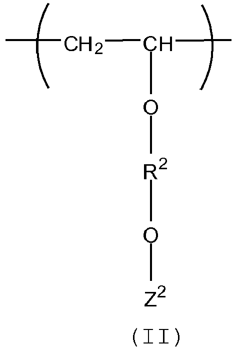 and
*at least one recurrent unit of the following formula (III) : 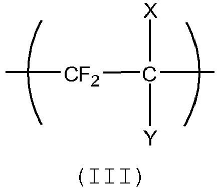 wherein:
- R¹ and R² represent, independently of each other, an alkylene group;
- Z¹ is a group of formula -PO₃R₃R₄, R₃ and R₄ representing, independently of each other, a hydrogen atom, an alkyl group or a cation;
- Z² is a group of formula -SO₂R₅, R₅ representing an alkyl group or an aryl group;
- X and Y represent, independently of each other, a halogen atom or a perfluorocarbon group.

2. The copolymer according to claim 1, wherein R¹ is a group of formula -CH₂-CH₂-.

3. The copolymer according to claim 1 or 2, wherein R² is a group of formula -CH₂-CH₂-CH₂-CH₂-.

4. The copolymer according to any of the preceding claims, wherein X and Y each represent a halogen atom, at least one of the groups X or Y being a fluorine atom.

5. The copolymer according to any of claims 1 to 3, wherein X represents a perfluoroalkyl group, while Y represents a halogen atom.

6. The copolymer according to any of the preceding claims, further comprising at least one recurrent unit of the following formula (IV): 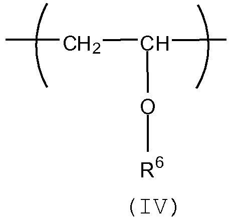 wherein R⁶ is an alkyl group.

7. The copolymer according to any of the preceding claims, selected from among the following copolymers:
- copolymers comprising as a recurrent unit compliant with formula (I), a recurrent unit of the following formula (Ia) : 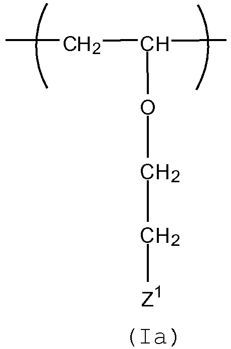 Z¹ being a group of formula -PO₃R₃R₄, with R₃ and R₄ being as defined in claim 1;
as a unit compliant with formula (II), a recurrent unit of the following formula (IIa) : 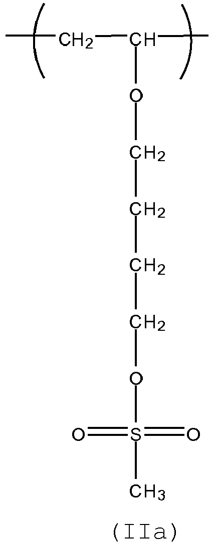 and as a unit compliant with formula (III), a recurrent unit of the following formula (IIIa): 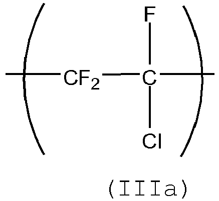
- copolymers comprising as a recurrent unit compliant with formula (I), a recurrent unit of the following formula (Ia) : 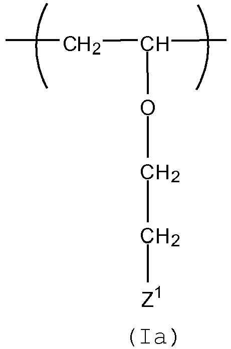 Z¹ being a group of formula -PO₃R₃R₄, with R₃ and R₄ being as defined in claim 1;
as a unit compliant with formula (II), a recurrent unit of the following formula (IIb): 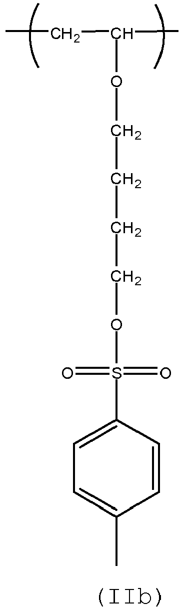 and as a unit compliant with formula (III), a recurrent unit of the following formula (IIIa):

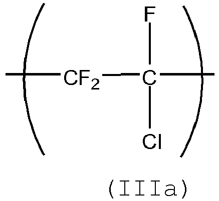

8. A method for preparing a copolymer as defined in claim 1 comprising the following steps:
- a copolymerization step, in the presence of at least one free radical initiator, of at least one monomer of formula (V), of at least one monomer of formula (VI), of at least one monomer of formula (VII) and optionally at least one monomer of formula (VIII): 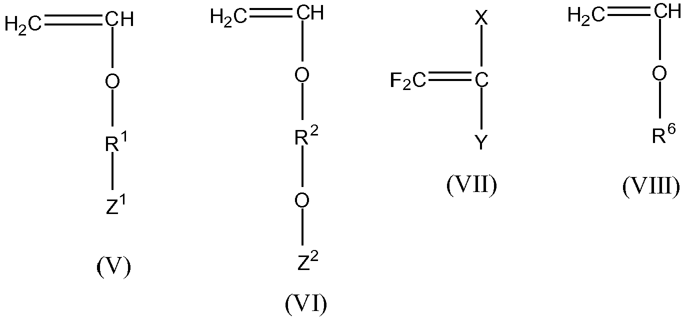 wherein R¹, Z¹, R², Z², X, Y and R⁶ are as defined in claim 1 and in claim 6;
- optionally, a step for hydrolysis of the -PO₃R₃R₄ group (when R₃ and R₄ represent an alkyl group), in return for which said group is transformed into a -PO₃R₃R₄ group, with R₃ and R₄ representing a hydrogen atom or a cation.

9. A cross-linked material which may be obtained by a method comprising a heat cross-linking step of at least one copolymer as defined according to any of claims 1 to 7.

10. The cross-linked material according to claim 9, wherein the heat cross-linking step consist of heating the copolymer(s) as defined in claim 10 to a temperature ranging from 100 to 200°C, preferably ranging from 140 to 170°C, the copolymer may be shaped as a membrane prior to heating.

11. A membrane comprising at least one copolymer as defined according to any of claims 1 to 7 and/or a cross-linked material as defined in claim 9 or 10.

12. A fuel cell device comprising at least one cell comprising two electrodes positioned on either side of a membrane as defined in claim 11.
